(19) Europäisches Patentamt
European Patent Office
Office européen des brevets

(11) **EP 3 893 165 A1**

(12) **EUROPEAN PATENT APPLICATION**

(43) Date of publication:
**13.10.2021  Bulletin 2021/41**

(51) Int Cl.:
***G06N 3/04*** (2006.01)          ***G06N 3/063*** (2006.01)
***G06N 3/08*** (2006.01)

(21) Application number: **21154527.2**

(22) Date of filing: **01.02.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2020   JP 2020069144**

(71) Applicant: **FUJITSU LIMITED
Kanagawa 211-8588 (JP)**

(72) Inventor: **Ito, Makiko
Kanagawa, 211-8588 (JP)**

(74) Representative: **Hoffmann Eitle
Patent- und Rechtsanwälte PartmbB
Arabellastraße 30
81925 München (DE)**

(54)   **INFORMATION PROCESSING APPARATUS AND INFORMATION PROCESSING METHOD**

(57)   An information processing device performing deep learning using a first number of processing devices that perform processes in parallel, the deep learning being performed using dynamic fixed-point number, the information processing device includes an allocation unit. The allocation unit configured to allocate, when allocating a propagation operation in a layer of the deep learning to the first number of processing devices, a second number of processing devices for every third number of pieces of input data, the third number being less than a first number, the second number of the processing device acquiring a statistical information used for adjusting decimal point positions of the dynamic fixed-point numbers, and allocate output channels for every third number of pieces of input data while shifting the output channels by a fourth number.

**EP 3 893 165 A1**

**Description**

[Field]

The embodiments discussed herein are related to an information processing apparatus and an information processing method.

[Background Art]

In recent years, in order to improve the recognition performance of a deep neural network (DNN), the number of parameters used for deep learning and the number of pieces of learning data have been increasing. Here, the parameters include weights between nodes, data held by the nodes, filter elements, and the like. For this reason, the computation load and memory load of a parallel computer used for speeding up the deep learning have grown larger, and the learning time has increased. In re-learning during the service of the DNN, the increase in learning time brings about a heavy burden.

Thus, in order to lighten the DNN, the number of bits used by the parameter to represent data is shrunk. For example, by using an 8-bit fixed-point number instead of a 32-bit floating-point number, the amount of data may be reduced and the amount of computation time may be reduced.

However, using the 8-bit fixed-point number deteriorates the accuracy of operations. In view of this, a dynamic fixed-point number capable of dynamically modifying the fixed-point position of a variable used for learning is used. When the dynamic fixed-point number is used, the parallel computer acquires statistical information on the variable during learning and automatically adjusts the fixed-point position of the variable. Furthermore, the parallel computer may decrease the overhead expected for acquiring the statistical information by providing a statistical information acquisition circuit in respective processing devices that perform operations in parallel.

[Citation List]

[Patent Literature]

[PTL 1] Japanese Laid-open Patent Publication No. 2018-124681.

[Summary]

[Technical Problem]

If the statistical information acquisition circuits are provided in all the processing devices of the parallel computer, the circuit area of the parallel computer becomes larger. Thus, in order to reduce the circuit area, it is conceivable to provide the statistical information acquisition circuit only in some processing devices. However, if the statistical information is acquired only by some processing devices and thinned out, an error occurs as compared with a case where the statistical information is acquired by all the processing devices, and an appropriate decimal point position may not be set. For this reason, there is a problem that the saturation and rounding of variable values increase during learning, and the learning accuracy deteriorates.

In one aspect, an object of the present embodiments is to suppress the deterioration of learning accuracy when a statistical information acquisition circuit is provided in some processing devices.

[Solution to Problem]

According to an aspect of the embodiments, an information processing apparatus performing deep learning using a first number of processing devices that perform processes in parallel, the deep learning being performed using dynamic fixed-point number, the information processing apparatus includes an allocation unit configured to: evenly allocate, when allocating a propagation operation in a layer of the deep learning to the first number of processing devices, a second number of processing devices for every third number of pieces of input data, the third number being less than a first number, the second number of the processing device acquiring a statistical information used for adjusting decimal point positions of the dynamic fixed-point numbers, and allocate output channels for every third number of pieces of input data while shifting the output channels by a fourth number.

[Effect]

On one aspect, the present invention can suppress a decrease in learning accuracy when a statistical information acquisition circuit is provided in some processing devices.

[Brief Description of Drawings]

FIG. 1 is a diagram illustrating a configuration of an information processing device according to an embodiment;
FIG. 2 is a diagram for explaining deep learning according to the embodiment;
FIG. 3 is a diagram illustrating an example of statistical information;
FIG. 4 is a diagram illustrating an example of mechanically allocating images and output channels to processing elements (PEs);
FIG. 5A is a first diagram illustrating an example of the influence of thinning out on the statistical information;
FIG. 5B is a second diagram illustrating an example of the influence of thinning out on the statistical information;
FIG. 6A is a diagram for explaining the reason why the statistical information is different when the output channels are mechanically allocated to the PEs as compared with a case where the statistical information is not thinned out;
FIG. 6B is a diagram for explaining the reason why the statistical information is different when the images are mechanically allocated to the PEs as compared with a case where the statistical information is not thinned out;
FIG. 7 is a diagram illustrating an allocation example by an allocation unit;
FIG. 8 is a diagram illustrating another allocation example by the allocation unit;
FIG. 9 is a sequence diagram illustrating a flow of a learning process by the information processing device;
FIGs. 10A is diagram for explaining calls for propagation operation;
FIGs. 10B is diagram for explaining calls for propagation operation;
FIG. 11 is a flowchart illustrating the flow of an allocation process when the images and the output channels are mechanically allocated to the PEs;
FIG. 12 is a diagram for explaining the variables illustrated in FIG. 11;
FIG. 13 is a flowchart illustrating the flow of an allocation process by the allocation unit;
FIG. 14 is a diagram for explaining the variables illustrated in FIG. 13;
FIG. 15 is a flowchart illustrating the flow of a process for the another allocation illustrated in FIG. 8 by the allocation unit;
FIG. 16 is a diagram for explaining the variables illustrated in FIG. 15;
FIG. 17A is a first diagram for explaining the effect of allocation by the allocation unit; and
FIG. 17B is a second diagram for explaining the effect of allocation by the allocation unit.

[Description of Embodiments]

Embodiments of an information processing device and an information processing method disclosed by the present application will be described in detail below based on the drawings. Note that the embodiments do not limit the technology disclosed.

[Embodiments]

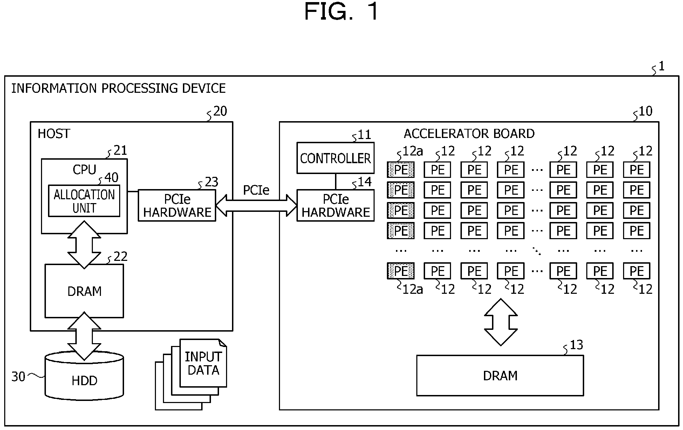

First, the information processing device (apparatus) according to an embodiment will be described. FIG. 1 is a diagram illustrating a configuration of the information processing device according to the embodiment. As illustrated in FIG. 1, the information processing device 1 according to the embodiment includes an accelerator board 10, a host 20, and a hard disk drive (HDD) 30.

The accelerator board 10 is a board equipped with a parallel computer that performs deep learning at high speed. The accelerator board 10 includes a controller 11, a plurality of processing elements (PEs) 12, a dynamic random access memory (DRAM) 13, and peripheral component interconnect express (PCIe) hardware 14. The number of PEs 12 is, for example, 2,048.

The controller 11 is a control device that controls the accelerator board 10. For example, the controller 11 instructs each PE 12 to execute an operation, based on an instruction from the host 20. The storage location of data input and output by each PE 12 is specified by the host 20. Note that, although omitted in FIG. 1, the controller 11 is connected to each PE 12.

The PE 12 executes an operation, based on the instruction from the controller 11. The PE 12 reads out and executes a program stored in the DRAM 13. A part of PEs 12a include a statistical information acquisition circuit and a statistical information storage circuit. The ratio of the part of PEs 12a to the number of all PEs 12 is, for example, 1/16. The number of the part of PEs 12a is, for example, a divisor of the number of all PEs 12. Note that, in the following, the part of PEs 12a will be referred to as information acquisition PEs 12a.

The statistical information acquisition circuit acquires statistical information. Note that the statistical information will be described later. The statistical information storage circuit stores the statistical information acquired by the statistical information acquisition circuit. The statistical information stored in the statistical information storage circuit is read out by the controller 11 and sent to the host 20. Note that the statistical information may be stored in the DRAM 13 so as to be read out from the DRAM 13 and sent to the host 20.

Furthermore, the information acquisition PE 12a is not limited to the configuration including the dedicated statistical information acquisition circuit and statistical information storage circuit as long as the information acquisition PE 12a can acquire the statistical information and send the acquired statistical information to the host 20. For example, a program executed by the PE 12 described later may include an instruction sequence for acquiring the statistical information. The instruction sequence for acquiring the statistical information is such that, for example, the result of a multiply-add operation is stored in a register #1 as a 32-bit integer, information on the most significant digit position of the result stored in the register #1 is stored in a register #2, and 1 is added to the value in a table indexed by the value in the register #2.

The DRAM 13 is a volatile storage device that stores a program executed by the PE 12, data input by each PE 12, and data output by each PE 12. An address used by each PE 12 for data input and output is specified by the host 20. The PCIe hardware 14 is hardware that communicates with the host 20 by PCI Express (PCIe).

The host 20 is a device that controls the information processing device 1. The host 20 includes a central processing unit (CPU) 21, a DRAM 22, and PCIe hardware 23.

The CPU 21 is a central processing unit that reads out a program from the DRAM 22 and executes the read-out program. The CPU 21 instructs the accelerator board 10 to execute parallel operations and performs deep learning by executing a deep learning program. The deep learning program includes an allocation program that allocates operations in deep learning to each PE 12. The CPU 21 implements an allocation unit 40 by executing the allocation program. Note that the details of the allocation unit 40 will be described later.

The DRAM 22 is a volatile storage device that stores programs and data stored in the HDD 30, intermediate results of program execution by the CPU 21, and the like. The deep learning program is called from the HDD 30 to the DRAM 22 and executed by the CPU 21.

The PCIe hardware 23 is hardware that communicates with the accelerator board 10 by PCI Express.

The HDD 30 stores the deep learning program, input data used for deep learning, a model generated by deep learning, and the like. The information processing device 1 may include a solid state drive (SSD) instead of the HDD 30.

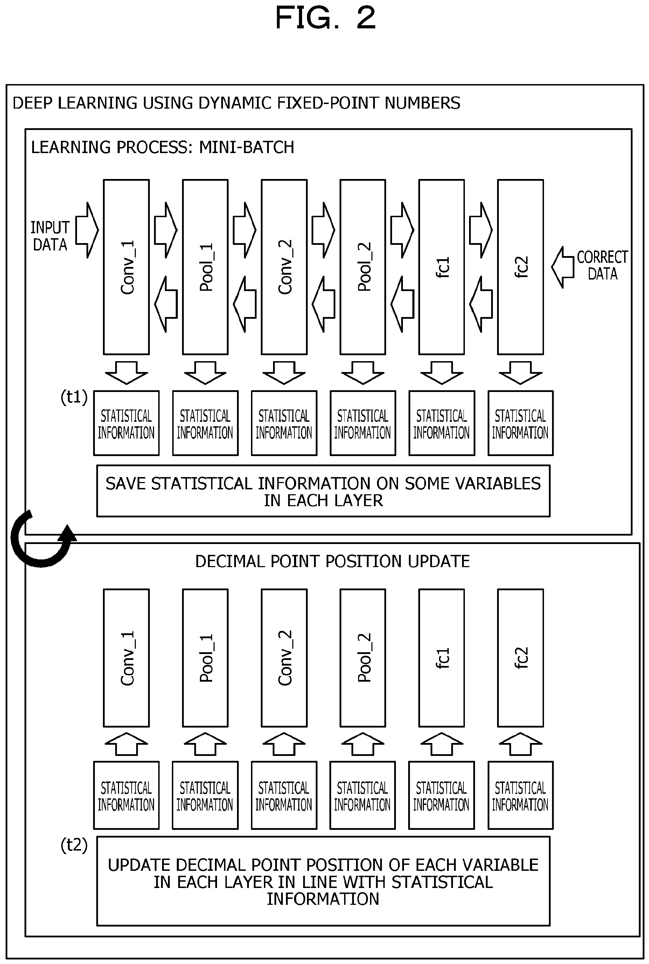

Next, deep learning according to the embodiment will be described. FIG. 2 is a diagram for explaining the deep learning according to the embodiment. As illustrated in FIG. 2, the deep learning according to the embodiment is executed by processes of a convolution layer #1 (Conv_1), a pooling layer #1 (Pool_1), a convolution layer #2 (Conv_2), a pooling layer #2 (Pool_2), a fully connected layer #1 (fc1), and a fully connected layer #2 (fc2). In the deep learning according to the embodiment, the input data is subjected to a forward propagation process in the order of the convolution layer #1, the pooling layer #1, the convolution layer #2, the pooling layer #2, the fully connected layer #1, and the fully connected layer #2. Then, the error is computed based on the output of the fully connected layer #2 and correct data, and a backpropagation process is performed based on the error in the order of the fully connected layer #2, the fully connected layer #1, the pooling layer #2, the convolution layer #2, the pooling layer #1, and the convolution layer #1.

The deep learning according to the embodiment is executed divided into processing units referred to as mini-batches. Here, the mini-batch is a combination of k pieces of data obtained by dividing a collection of input data to be learned {(Ini, Ti), i = 1 to N} into plural sets (for example, M sets of k pieces of data, N = k * M). Furthermore, the mini-batch refers to a processing unit of learning that is executed on every such input data set (k pieces of data). Here, Ini is input data (vector) and Ti is correct data (vector). The information processing device 1 acquires statistical information about some of variables of each layer and updates the decimal point position of each variable of each layer for each mini-batch during the deep learning as follows. Here, a decimal point position e corresponds to an exponent part common to all the elements of a parameter X. When the element of the parameter X is denoted by x and the integer representation is denoted by n, the representation $x = n \times 2^e$ can hold. Note that the information processing device 1 may update the decimal point position every time the learning of the mini-batch is ended a predetermined number of times.

The information processing device 1, for example, determines the initial decimal point position of each variable by trial (for example, one time on a mini-batch) with a floating-point number or user specification, and starts learning. Then, the information processing device 1 saves the statistical information about some variables in each layer during learning of one mini-batch (k pieces of data) (t1). If overflow occurs while learning the mini-batch, the information processing device 1 performs a saturation process and continues learning. Then, the information processing device 1 updates the decimal point position of the fixed-point number in line with the statistical information after the learning of the mini-batch one time is ended (t2). Thereafter, the information processing device 1 repeats t1 and t2 until a predetermined learning end condition is satisfied.

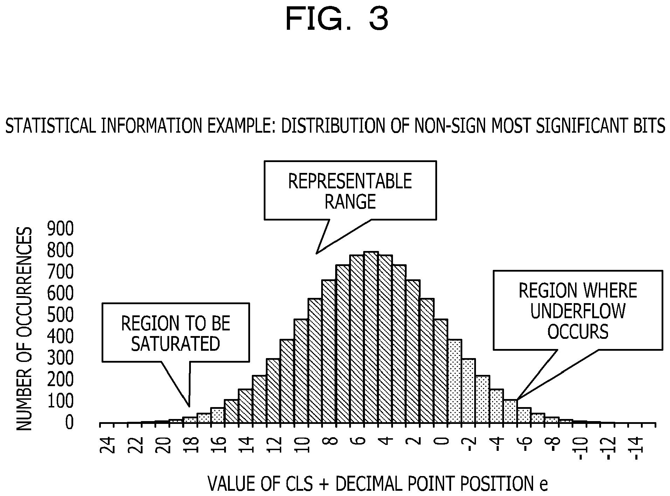

FIG. 3 is a diagram illustrating an example of the statistical information. FIG. 3 illustrates the distribution of position of leftmost set bit for positive number and position of leftmost zero bit for negative number, as an example of the statistical information. Here, the position of leftmost set bit means the position of a leftmost bit where the bit has 1. Furthermore, for negative numbers, the position of leftmost set bit means the position of a leftmost bit that has bit 0. The position of leftmost set bit for positive number and position of leftmost zero bit for negative number refers to, for example, the position of a bit with the largest index k among bits[k] different from a sign bit bit[39] when the bits are placed from the most significant bit bit[39] to the least significant bit bit[0]. When the distribution of the position of leftmost set bit for positive number and position of leftmost zero bit for negative number is obtained, the distribution range of the values as absolute values can be grasped.

In FIG. 3, the vertical axis denotes the number of occurrences of the position of leftmost set bit for positive number and position of leftmost zero bit for negative number, and the horizontal axis denotes a value obtained by adding the decimal point position e to a count leading sign (CLS), which is the position of the non-sign most significant bit. An arithmetic operation circuit of the PE 12 of the information processing device 1 and a register in the arithmetic operation circuit have a bit width (for example, 40 bits) equal to or greater than the number of bits (for example, 16 bits) of the register specified by an instruction operand. However, the bit width of the arithmetic operation circuit of the PE 12 and the register in the arithmetic operation circuit is not necessarily limited to 40 bits. Here, the decimal point position e is determined by the decimal point position at the input of an operation. For example, in the case of multiplication, when the decimal point positions of two input vectors are denoted by e1 and e2, e1 + e2 obtained by adding e1 and e2 is employed. In addition, the operation result is stored in a register (a register specified by an instruction operand) having a bit width smaller than the bit width of the arithmetic operation circuit, such as a 16-bit register, for example. As a result, the operation result (for example, 40 bits) is shifted by a shift amount specified by the operand, and a bit corresponding to less than bit 0 is subjected to a predetermined rounding process, while data that exceeds the bit width of the register specified by the operand is subjected to a saturation process. The shift amount is a difference (eo - e) between the decimal point position e and the output decimal point position eo. FIG. 3 illustrates a region that can be represented by a 16-bit fixed point, a region that is to be saturated, and a region where underflow occurs, supposing that the shift amount is 15 bits.

Furthermore, the numerical values given to the horizontal axis of FIG. 3 indicate the numerical values that can be represented by a fixed point. For example, when the information processing device 1 alters the decimal point position eo by -2, the region to be saturated is expanded by 2 bits, and the region in which the underflow occurs is decreased by 2 bits. In addition, for example, when the information processing device 1 alters the decimal point position eo by +2, the region to be saturated is decreased by 2 bits, and the region in which the underflow occurs is expanded by 2 bits.

The information processing device 1 may determine an appropriate fixed-point position by obtaining the distribution of the position of leftmost set bit for positive number and position of leftmost zero bit for negative number, during learning execution. For example, the information processing device 1 can determine the fixed-point position such that the data to be saturated is equal to or less than a specified ratio. This means that, as an example, the information processing device 1 can determine the fixed-point position prior to the data saturation becoming a predetermined degree rather than the data underflow becoming a predetermined degree.

Note that, as statistical information, instead of the distribution of the position of leftmost set bit for positive number and position of leftmost zero bit for negative number, the information processing device 1 may use the distribution of the non-sign least significant bit positions, the maximum value at the position of leftmost set bit for positive number and position of leftmost zero bit for negative number, or the minimum value at the position of leftmost set bit for positive number and position of leftmost zero bit for negative number.

Here, the distribution of the non-sign least significant bit positions means the distribution of the positions of the least significant bits where the bits have different values from the signs. For example, when the bits are placed in an array from the most significant bit being bit[39] to the least significant bit being bit[0], the least significant bit position is the position of a bit with the smallest index k among the bits[k] different from the sign bit bit[39]. In the distribution of the non-sign least significant bit positions, a least significant bit including valid data is grasped.

Furthermore, the maximum value at the position of leftmost set bit for positive number and position of leftmost zero bit for negative number is the maximum value among the values at the most significant bit positions that have values different from the value of the sign bit for one or more fixed-point numbers targeted for instruction execution from the time when the statistical information storage circuit was cleared by a clear instruction to the present time. The information processing device 1 can use the maximum value at the position of leftmost set bit for positive number and position of leftmost zero bit for negative number to determine an appropriate decimal point position of the dynamic fixed-point number.

The minimum value at the non-sign least significant bit position is the minimum value among the values at the least significant bit positions that have values different from the value of the signs for one or more fixed-point numbers from the time when the statistical information storage circuit was cleared by a clear instruction to the present time. The information processing device 1 can use the minimum value at the non-sign least significant bit position to determine an appropriate decimal point position of the dynamic fixed-point number.

Next, the allocation unit 40 will be described. The information processing device 1 executes all the operations performed in deep learning in parallel as much as possible in order to effectively utilize the PEs 12. Here, the information processing device 1 collectively perform operations of the mini-batches to proceed with the learning.

Taking the operation of the convolution layer as an example, it is assumed that the filter size is 3 × 3, the number of images in the mini-batch is N, the number of input channels is Cin, the number of output channels is Cout, the height of the image is H, and the width of the image is W. The number of pixels of data to be input is N * Cin * (H + 2) * (W + 2). Here, "*" indicates multiplication. Furthermore, "2" indicates the number of paddings at two ends in a height direction or a width direction of the image. The number of pixels of the filter to be input is Cin * Cout * 3 * 3. The number of results to be output is N * Cout * H * W. The operation content is indicated by following expression (1).

[Expression 1]

$$Output\ [n][c_o][h][w] = \sum_{c_i}^{Cin} \sum_{p}^{3} \sum_{q}^{3} Input\ [n][c_i][h+p][w+q] * Filter\ [c_i][c_o][p][q] \quad \cdots (1)$$

In expression (1), $n = 0, 1,..., N - 1$, $c_o = 0, 1,..., Cout - 1$, $h = 0, 1,..., H$, $w = 0, 1,..., W - 1$, $c_i = 0, 1,..., Cin - 1$, $p = 0, 1, 2$, and $q = 0, 1, 2$ hold. Furthermore, an output $[n][c_o][h][w]$ indicates the value of a pixel of an n-th image in a $c_o$-th output channel at an h-th place in the height direction and a w-th place in the width direction, and an input$[n][C_i][h + p][w + q]$ indicates the value of a pixel of the n-th image in a $c_i$-th input channel at the (h+p)-th place in the height direction and the (w+g)-th place in the width direction. A filter $[c_i][c_o][p][q]$ indicates the value of a pixel of a filter in the $c_o$-th output channel of the $c_i$-th input channel at a p-th place in the height direction and a q-th place in the width direction.

As illustrated in expression (1), the operation of the convolution layer can be computed independently between each of the image (n), the output channel ($c_o$), and the pixel (h, w). In addition, since the input pixel data and filter data are used many times, it is efficient to achieve parallelization in an image direction and an output channel direction in this order, in order to enhance the efficiency of data transfer between the DRAM 13 and the PEs 12.

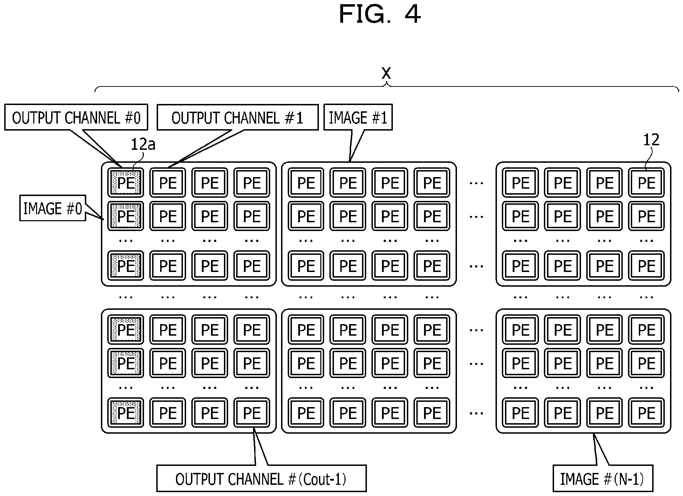

Thus, as illustrated in FIG. 4, it is conceivable to mechanically allocate the images and output channels to the PEs 12. In FIG. 4, the total number of PEs 12 is N * Cout. Furthermore, when the number of PEs 12 placed side by side is denoted by X, the thinning rate is 1/X, and the number of information acquisition PEs 12a is N ∗ Cout/X.

In this allocation, only the statistical information on a specific image such as an image #0 and a specific output channel such as an output channel #0 is acquired. The statistical information on an image #1, an image #(N - 1), and the like, and the output channels such as an output channel #1 and an output channel #(Cout - 1) is not acquired. For this reason, the statistical information will be different compared with a case where the statistical information is not thinned out.

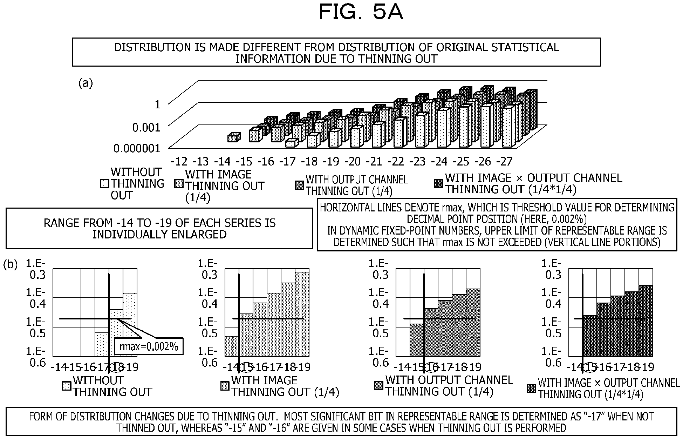

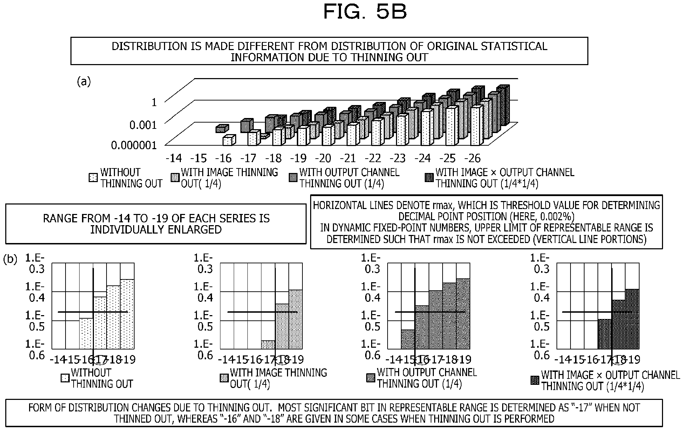

FIGs. 5A and 5B are diagrams illustrating an example of the influence of thinning out on the statistical information. The vertical axis indicates the number of pieces of data. The number of pieces of data is expressed as a percentage to the number of all pieces of data. The series of negative integers on the horizontal axis denotes the values of the exponential parts when the data is expressed in binary. FIGs. 5A(a) and 5B(a) illustrate statistical information for four cases: a case without thinning out, a case with image thinning out, a case with output channel thinning out, and a case with image × output channel thinning out. The image thinning rate and the output channel thinning rate are 1/4 each.

Furthermore, FIGs. 5A(b) and 5B(b) are diagrams in which the range from -14 to -19 of each series is individually enlarged. In FIGs. 5AB and 5BB, the horizontal lines indicate rmax, which is a threshold value for determining the decimal point position. Here, rmax = 0.002% is employed. The vertical lines indicate the upper limit of a representable range that does not exceed rmax.

As illustrated in FIGs. 5A(a) and 5B(a), the distribution when thinned out is different from the distribution when not thinned out. Furthermore, as illustrated in FIG. 5A(b), the most significant bit in the representable range is "-18" when not thinned out, but the most significant bit in the representable range is "-15" or "-16" when thinning out is performed. Furthermore, as illustrated in FIG. 5B(b), the most significant bit in the representable range is "-17" when not thinned out, but the most significant bit in the representable range is "-16" or "-18" when thinning out is performed.

In this manner, if the images and output channels are mechanically allocated to the PEs 12, the statistical information will be different from a case where the statistical information is not thinned out.

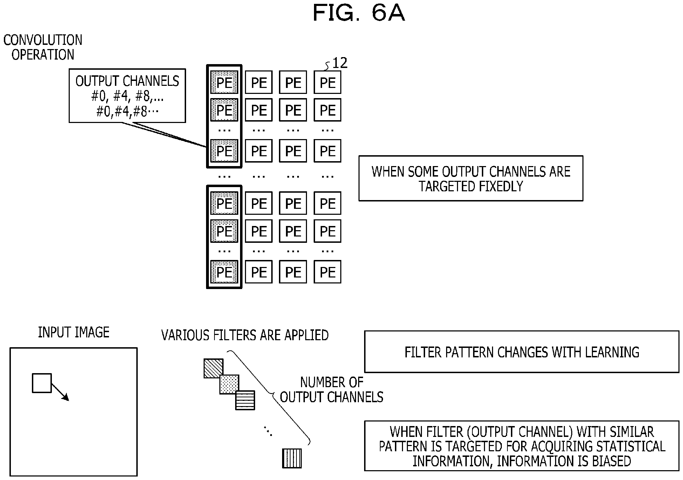

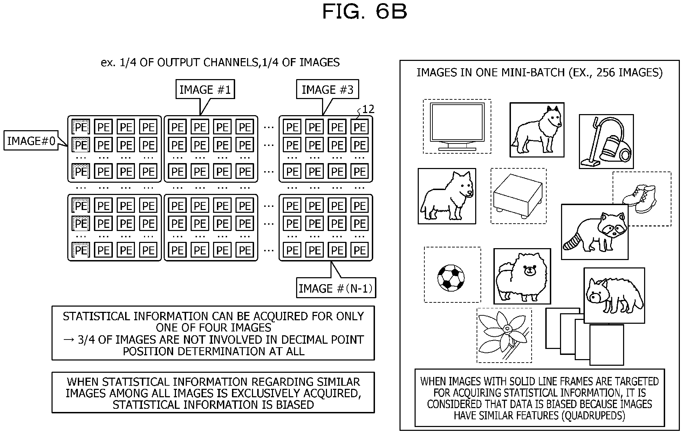

FIG. 6A is a diagram for explaining the reason why the statistical information is different when the output channels are mechanically allocated to the PEs 12 as compared with a case where the statistical information is not thinned out. In addition, FIG. 6B is a diagram for explaining the reason why the statistical information is different when the images are mechanically allocated to the PEs 12 as compared with a case where the statistical information is not thinned out.

**EP 3 893 165 A1**

FIG. 6A illustrates a case where the statistical information is acquired for output channels #0, #4, #8,.... As illustrated in FIG. 6A, in deep learning, various filters are applied to the input image. The filter pattern changes with learning, but when a filter (output channel) with a similar pattern is targeted for acquiring the statistical information, the information is biased. Since the filter pattern changes as the learning progresses, it is difficult to control the similarity between the patterns.

In FIG. 6B, the thinning rates of the output channels and the images are 1/4. As illustrated in FIG. 6B, when the statistical information is acquired for only one of four images, 3/4 of the images are not involved in the decimal point position determination. Therefore, when the images with the solid line frames are targeted for acquiring the statistical information among the images in one mini-batch, the data is biased and the statistical information is biased because the images have similar features (quadrupeds).

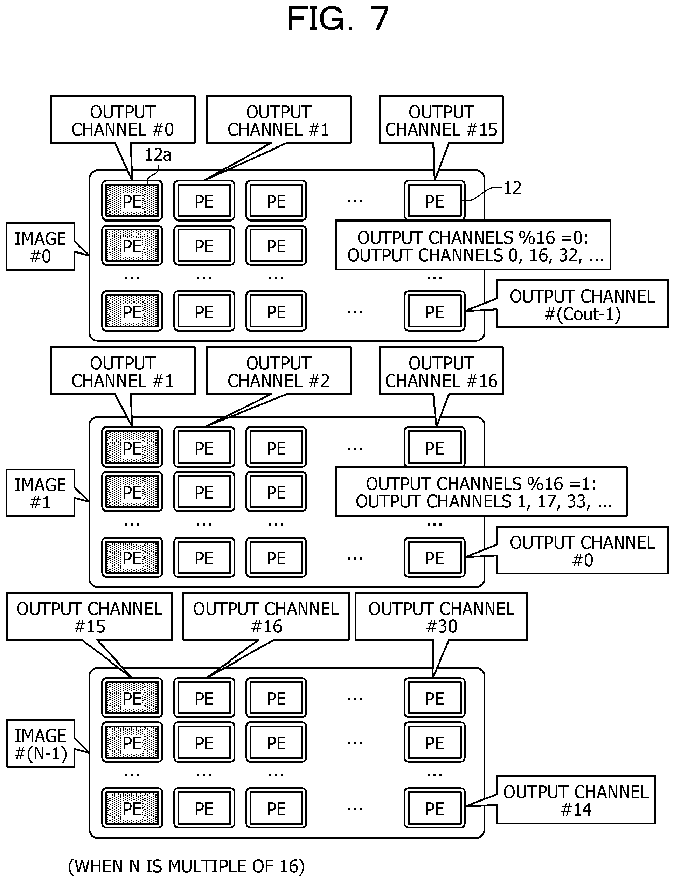

In view of this, the allocation unit 40 allocates the PEs 12 such that all images and all output channels are targeted for acquiring the statistical information. FIG. 7 is a diagram illustrating an allocation example by the allocation unit 40. In FIG. 7, the images are not thinned out. Furthermore, the thinning rate of the output channels is 1/16, and N is a multiple of 16.

As illustrated in FIG. 7, the allocation unit 40 rotates the output channels for each image to allocate the output channels to the PEs 12. For example, when the remainder obtained by dividing the image number by 16 is 0, the allocation unit 40 allocates output channels #0, #16, #32,... to the information acquisition PEs 12a. Furthermore, when the remainder obtained by dividing the image number by 16 is 1, the allocation unit 40 allocates output channels #1, #17, #33,... to the information acquisition PEs 12a. Similarly, in the image #(N - 1), the allocation unit 40 allocates output channels #15, #31,..., #(Cout - 1) to the information acquisition PEs 12a.

In this manner, since the allocation unit 40 rotates the output channels for each image to allocate the output channels to the PEs 12, even when the information acquisition PEs 12a are thinned out as a part of the whole PEs 12, a bias in the statistical information may be mitigated.

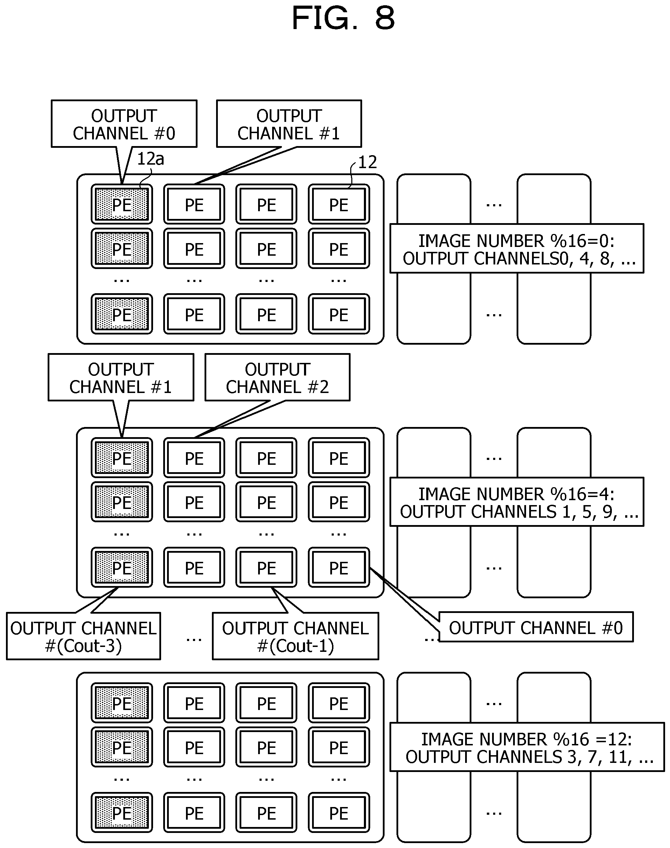

FIG. 8 is a diagram illustrating another allocation example by the allocation unit 40. In FIG. 8, the thinning rates of the images and the output channels are 1/4. As illustrated in FIG. 8, the allocation unit 40 allocates the information acquisition PEs 12a to 1/4 of the images, and in regard to the images to which the information acquisition PEs 12a, allocates the output channels to the PEs 12 by rotating the output channels for each image.

For example, the allocation unit 40 allocates the information acquisition PEs 12a to images #0, #4, #8,..., but does not allocate the information acquisition PEs 12a to images #1, #2, #3, #5, #6, #7,.... Then, when the remainder obtained by dividing the image number by 16 is 0, the allocation unit 40 allocates output channels #0, #4, #8,... to the information acquisition PEs 12a. Furthermore, when the remainder obtained by dividing the image number by 16 is 4, the allocation unit 40 allocates output channels #1, #5, #9,... to the information acquisition PEs 12a. Similarly, when the remainder obtained by dividing the image number by 16 is 12, the allocation unit 40 allocates output channels #3, #7, #11,... to the information acquisition PEs 12a.

In this manner, since the allocation unit 40 rotates the output channels for each image to allocate the output channels to the PEs 12 in regard to the images to which the information acquisition PEs 12a are allocated, even when the information acquisition PEs 12a are thinned out as a part of the whole PEs 12, a bias in the statistical information may be mitigated.

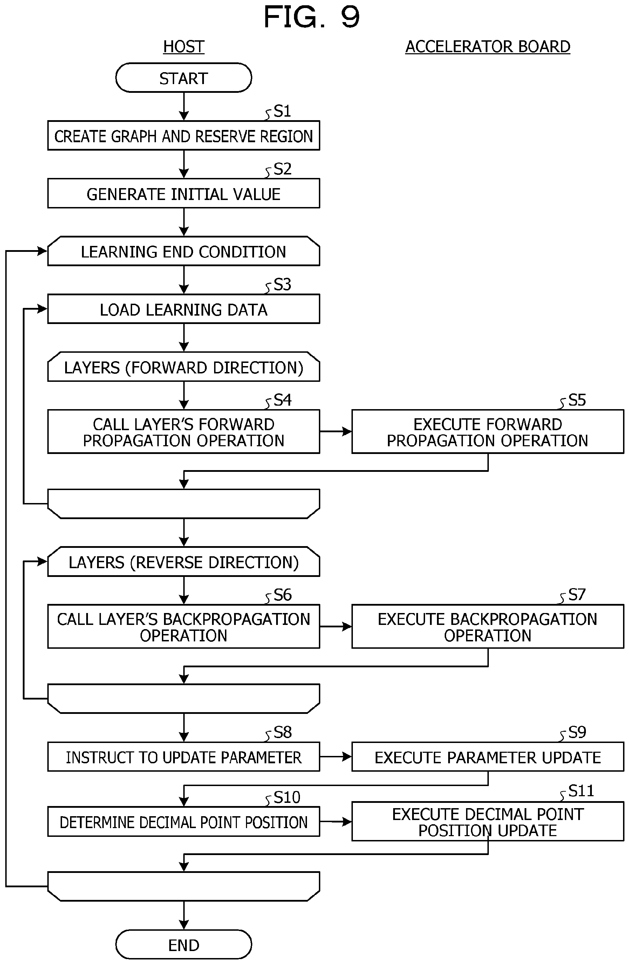

Next, the flow of a learning process by the information processing device 1 will be described. FIG. 9 is a sequence diagram illustrating a flow of the learning process by the information processing device 1. As illustrated in FIG. 9, the host 20 creates a graph representing a neural network and reserves a region (step S1). Here, the graph representing the neural network is, for example, a graph made up of the convolution layer #1, the pooling layer #1, the convolution layer #2, the pooling layer #2, the fully connected layer #1, and the fully connected layer #2 illustrated in FIG. 2. Furthermore, the region is a place to store a parameter. The host 20 then generates an initial value of the parameter (step S2). Note that the host 20 may read the initial value from a file instead of generating the initial value.

Then, the host 20 repeats the processes in steps S3 to S11 until an end condition for learning is satisfied. The end conditions for learning include, for example, the number of times of learning and the fulfillment of a desired value. As repetitive processes performed on the accelerator board 10, the host 20 loads the learning data (step S3) and calls a layer's forward propagation operation (step S4) in a forward direction of the layers. The propagation operation is a convolution operation in the convolution layer, a pooling operation in the pooling layer, and a fully connected operation in the fully connected layer.

When called by the host 20, the accelerator board 10 executes the forward propagation operation (step S5). Then, the host 20 calls a layer's backpropagation operation (step S6) on the accelerator board 10 in a reverse direction of the layers. When called by the host 20, the accelerator board 10 executes the backpropagation operation (step S7).

Then, the host 20 instructs the accelerator board 10 to update the parameter (step S8). When instructed by the host 20, the accelerator board 10 executes the parameter update (step S9). Then, the host 20 determines the decimal point position of the dynamic fixed-point number based on the statistical information, and instructs the accelerator board 10 to update the decimal point position (step S10). When instructed by the host 20, the accelerator board 10 executes

7

the decimal point position update (step S11).

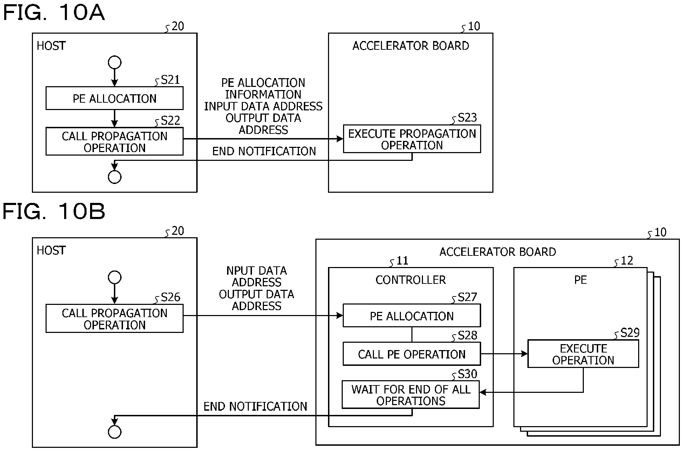

FIGs. 10A and 10B are diagrams for explaining calls for the propagation operation. FIG. 10A illustrates a basic form, and FIG. 10B illustrates a derivative form. As illustrated in FIG. 10A, in the basic form, the host 20 performs PE allocation (step S21) and calls the propagation operation on the accelerator board 10 together with PE allocation information, an input data address, and an output data address (step S22). Then, the accelerator board 10 executes the propagation operation (step S23) and transmits an end notification to the host 20.

In this manner, in the basic form, since the host 20 performs the PE allocation, the host 20 instructs the accelerator board 10 to execute the propagation operation together with the PE allocation information.

On the other hand, in the derivative form, the host 20 calls the propagation operation on the accelerator board 10 together with the input data address and the output data address (step S26), as illustrated in FIG. 10B. Then, the controller 11 of the accelerator board 10 performs PE allocation (step S27) and executes a PE operation call for each PE 12 (step S28). Subsequently, each PE 12 executes the operation (step S29). Thereafter, the controller 11 waits for the end of all the operations (step S30), and when the wait is completed, transmits an end notification to the host 20.

In this manner, in the derivative form, since the controller 11 performs the PE allocation, the host 20 instructs the accelerator board 10 to execute the propagation operation without the PE allocation information.

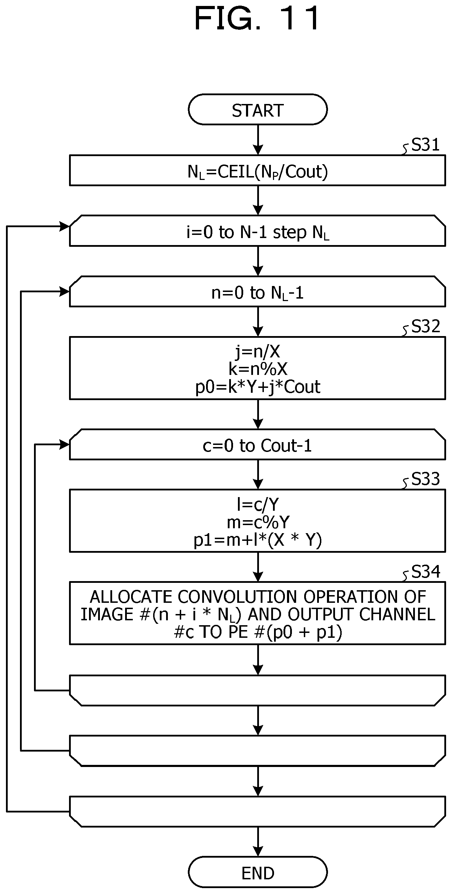

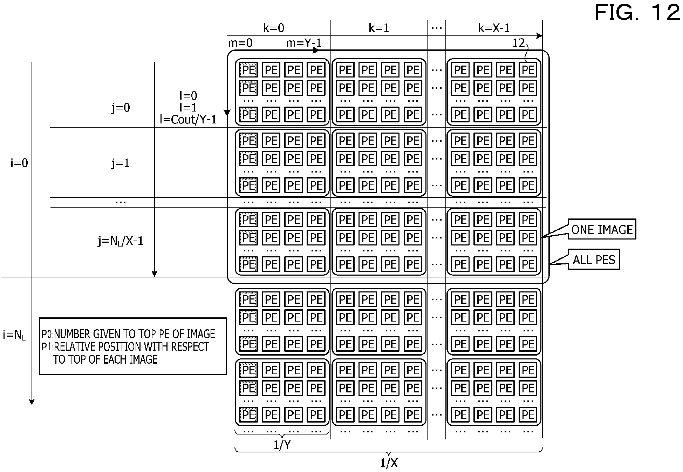

Next, the flow of an allocation process will be described with reference to FIGs. 11 to 16. FIG. 11 is a flowchart illustrating the flow of an allocation process when the images and the output channels are mechanically allocated to the PEs 12, and FIG. 12 is a diagram for explaining the variables illustrated in FIG. 11.

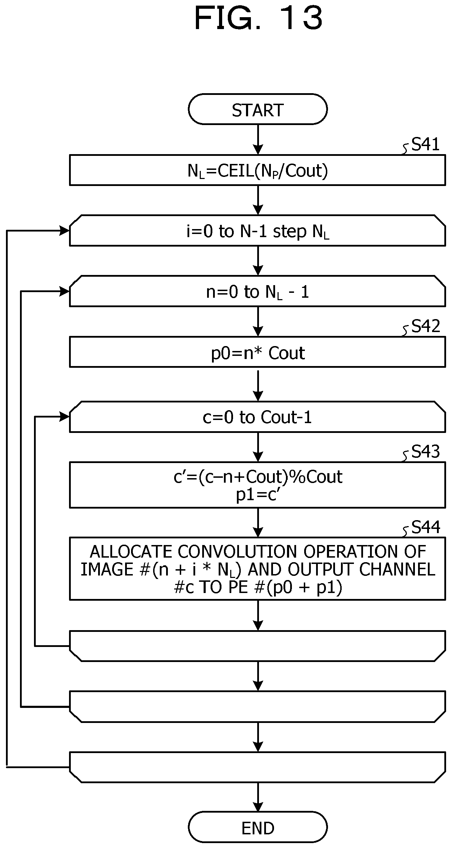

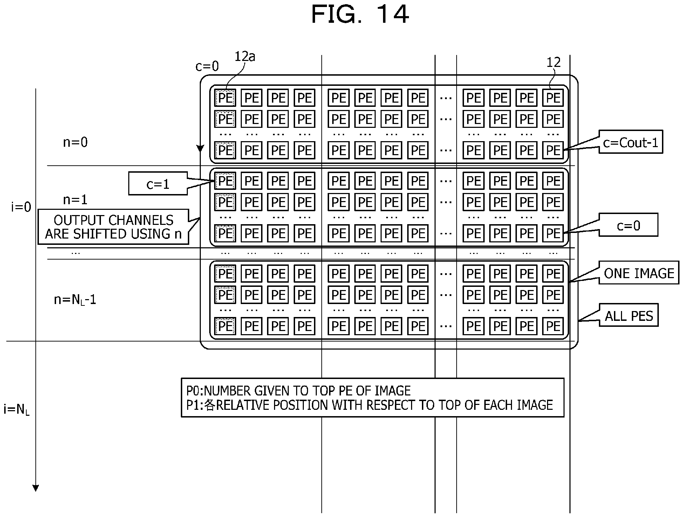

In FIGs. 11 to 16, N denotes the number of images and Cout denotes the number of output channels. An image # expression denotes an image whose identification number is the value of the expression, an output channel # expression denotes an output channel whose identification number is the value of the expression, and PE #p denotes a PE 12 whose identification number is p. In FIGs. 11, 12, 15, and 16, the thinning rate in the image direction is 1/X, and the thinning rate in the output channel direction is 1/Y. In FIGs. 13 and 14, the thinning rate in the output channel direction is 1/X.

Note that it is assumed that $N_L$ is a multiple of X and Cout is a multiple of Y. $N_L$ denotes the number of images allocated at one time. For example, when N is assumed as a multiple of $N_L$ and the number of PEs 12 is denoted by $N_P$, the product of the total number of allocations = Np and the number of times of allocation to all PEs 12 = $N_P * (N/N_L)$ holds. Meanwhile, since the total number of allocations = N * Cout holds, $N_P * (N/N_L) = N * $ Cout holds. Therefore, $N_P/N_L$ = Cout holds, and Np/Cout = $N_L$ holds. CEIL(x) is a function that rounds up x to an integer.

Furthermore, in FIGs. 11 and 12, i denotes a variable for counting the number of times of allocation to all PEs 12, and is incremented by $N_L$ from 0 within a range not exceeding N - 1. The sign p denotes a number that identifies the PE 12. The sign n denotes a variable for counting the number of times of image allocation, and is incremented by 1 from 0 to $N_L$ - 1. The sign c denotes a variable for counting the number of times of allocation of Cout output channels, and is incremented by 1 from 0 to Cout - 1. The sign j denotes a variable for counting the number of times of allocation of X images, and is given as the quotient of n divided by X. The sign k denotes a variable for counting the number of image allocations in the allocation of the X images, and is given as a remainder obtained by dividing n by X. The sign I denotes a variable for counting the number of times of allocation of Y output channels in the allocation to one image, and is given as the quotient of c divided by Y. The sign m denotes a variable for counting the number of output channel allocations in the allocation of Y output channels, and is given as a remainder obtained by dividing c by Y.

As illustrated in FIG. 11, the allocation unit 40 computes CEIL($N_P$/Cout) and sets CEIL($N_P$/Cout) in $N_L$ (step S31). Here, the allocation unit 40 mechanically allocates the images and the output channels to the PEs 12. Then, the allocation unit 40 repeats the process of allocating one combination of the image and the output channel to each PE 12 entirely N/$N_L$ times.

The allocation unit 40 increments n by 1 from 0 to $N_L$ - 1, and allocates the output channels of an image #n to the PEs 12. The allocation unit 40 computes the variables j and k, and sets k * Y + j * Cout in a variable p0 that represents the top PE number to which the image #n is allocated (step S32). The allocation unit 40 increments c by 1 from 0 to Cout - 1, and repeats the process of allocating the output channel #c of the image #n to the PE 12 Cout times.

In one process of allocating one combination of the image and the output channel to each PE 12 entirely, the allocation unit 40 computes the variables I and m to set m + I * X * Y in a variable p1 that represents the relative value of the PE number to which the channel #c is allocated (step S33), and allocates an image #(n + i * $N_L$) and the output channel #c to PE #(p0 + pi) (step S34). The allocation unit 40 increments c by 1 from 0 to Cout - 1, and repeats steps S33 and S34.

FIG. 13 is a flowchart illustrating the flow of the allocation process by the allocation unit 40, and FIG. 14 is a diagram for explaining the variables illustrated in FIG. 13.

Furthermore, in FIGs. 13 and 14, i denotes a variable for counting the number of times of allocation to all PEs 12, and is incremented by $N_L$ from 0 within a range not exceeding N - 1. The sign n denotes a variable for counting the number of image allocations in the allocation to all PEs 12, and is incremented by 1 from 0 to $N_L$ - 1. The sign c denotes a variable for counting the number of times of allocation of Cout output channels, and is incremented by 1 from 0 to Cout - 1.

As illustrated in FIG. 13, the allocation unit 40 computes CEIL($N_P$/Cout) and sets CEIL($N_P$/Cout) in $N_L$ (step S41). Then, the process of allocating one combination of the image and the output channel to each PE 12 entirely is repeated $N/N_L$ times. Then, the allocation unit 40 increments n by 1 from 0 to $N_L$ - 1, and allocates the output channels of the image #n to the PEs 12.

The allocation unit 40 sets n * Cout in the variable p0 that represents the top PE number to which the image #n is allocated (step S42). The allocation unit 40 increments c by 1 from 0 to Cout - 1, and repeats the process of allocating the output channel #c of the image #n to the PE 12 Cout times.

In one process of allocating one combination of the image and the output channel to each PE 12 entirely, the allocation unit 40 sets (c - n + Cout)%Cout in a variable c' for the channel #c to set c' in the variable p1 that represents the relative value of the PE number to which the channel #n is allocated (step S43), and allocates the image #(n + i * $N_L$) and the output channel #c to PE #(p0 + p1) (step S44). For example, the allocation unit 40 shifts the output channels using n in step S43. The allocation unit 40 increments c by 1 from 0 to Cout, and repeats steps S43 and S44.

In this manner, when allocating the combination of the images and the output channels to the PEs 12, the allocation unit 40 shifts the output channels using n, which means to rotate the output channels for each image, such that a bias in the statistical information may be mitigated.

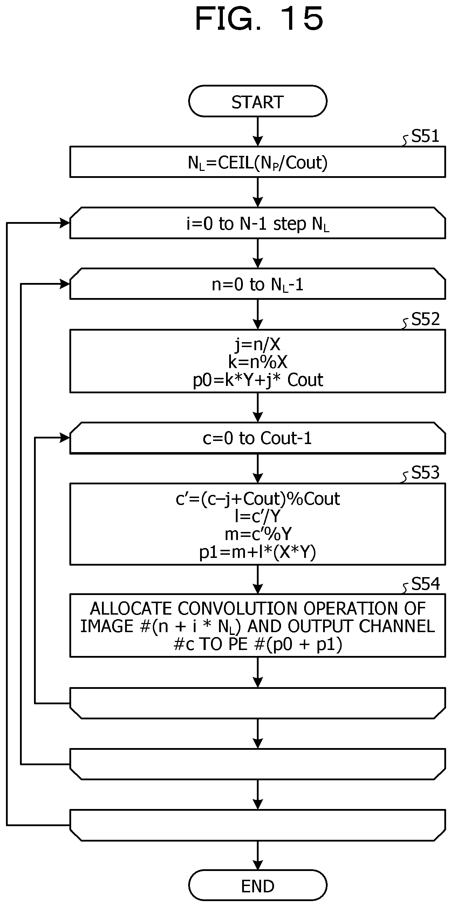

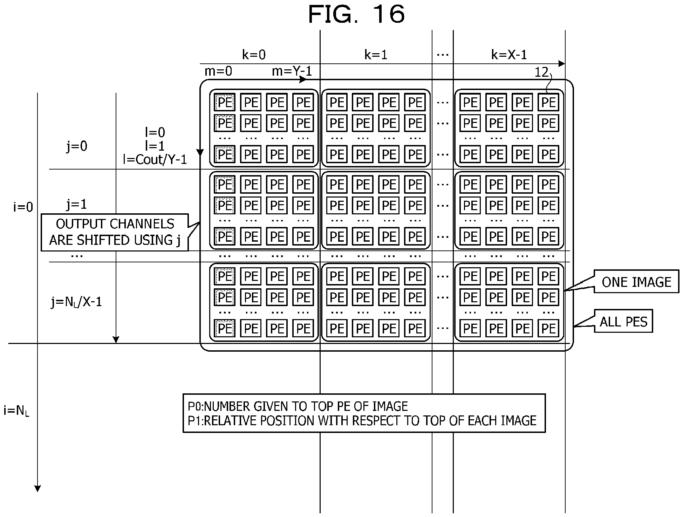

FIG. 15 is a flowchart illustrating the flow of a process for the another allocation illustrated in FIG. 8 by the allocation unit 40, and FIG. 16 is a diagram for explaining the variables illustrated in FIG. 15. Comparing FIGs. 11 and 15 and FIGs. 12 and 16, the process in step S53 is different from the process in step S33 in FIG. 15. For example, (c - j + Cout)%Cout is set in the variable c', and the variables I and m are set using the variable c' instead of the variable c. The allocation unit 40 performs n + i * $N_L$, which means to shift the output channels using j.

In this manner, when allocating the combination of the images and the output channels to the PEs 12, the allocation unit 40 shifts the output channels using j, which means to rotate the output channels for each allocation of X images, such that a bias in the statistical information may be mitigated.

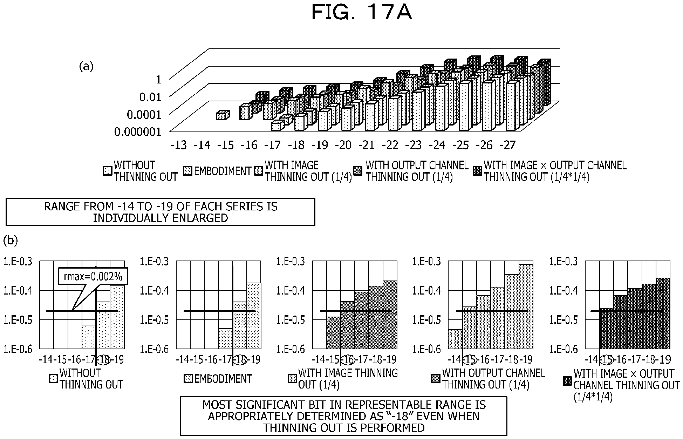

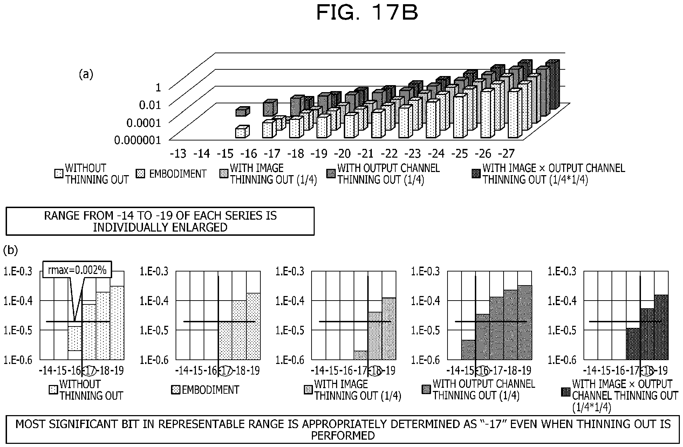

Next, the effect of allocation by the allocation unit 40 will be described. FIGs. 17A and 17B are diagrams for explaining the effect of allocation by the allocation unit 40. As illustrated in FIGs. 17A(a) and 17B(a), the distribution when the allocation according to the embodiment is performed is similar to the distribution when no thinning out is performed, as compared with the other cases where thinning out is performed. Furthermore, as illustrated in FIG. 17A(b), the most significant bit in the representable range is "-18", which is the same as the case where no thinning out is performed, even when thinning out is performed. In addition, as illustrated in FIG. 17B(b), the most significant bit in the representable range is "-17", which is the same as the case where no thinning out is performed, even when thinning out is performed.

As described above, in the embodiment, the accelerator board 10 includes the information acquisition PEs 12a as a part of the whole PEs 12. Furthermore, when allocating the layer's propagation operation of deep learning to the PEs 12, the allocation unit 40 of the host 20 evenly allocates the information acquisition PEs 12a for every certain number of images, and rotates the output channels for every certain number of images to allocate the output channels to the PEs 12. Therefore, the information processing device 1 may suppress a bias in the statistical information and may suppress the deterioration of the learning accuracy.

Furthermore, in the embodiment, the allocation unit 40 evenly allocates the information acquisition PEs 12a for each image, and rotates the output channels for each image to allocate the output channels to the PEs 12, such that a bias in the statistical information may be suppressed.

In addition, in the embodiment, when allocating the propagation operation in the convolution layer of deep learning to the PEs 12, the allocation unit 40 evenly allocates the information acquisition PEs 12a for every certain number of images, and rotates the output channels for every certain number of images to allocate the output channels to the PEs 12. Therefore, the information processing device 1 may suppress a bias in the statistical information acquired in the propagation operation in the convolution layer.

Besides, in the embodiment, the controller 11 of the accelerator board 10 may perform the allocation process instead of the allocation unit 40, such that the load on the host 20 may be lowered.

Additionally, in the embodiment, the case of learning images has been described, but the information processing device 1 may learn other data.

**Claims**

1. An information processing device performing deep learning using a first number of processing devices that perform processes in parallel, the deep learning being performed using dynamic fixed-point number, the information processing device comprising:
an allocation unit configured to:

allocate, when allocating a propagation operation in a layer of the deep learning to the first number of processing devices, a second number of processing devices for every third number of pieces of input data, the third number being less than a first number, the second number of the processing device acquiring a statistical information used for adjusting decimal point positions of the dynamic fixed-point numbers, and allocate output channels for every third number of pieces of input data while shifting the output channels by a fourth number.

2. The information processing device according to claim 1, wherein the second number of the processing device being less than the first number of the processing devices, the first number of the processing devices including the second number of the processing device.

3. The information processing device according to claim 1, wherein the allocation unit allocates the propagation operation in a convolution layer of the deep learning to the first number of processing devices.

4. The information processing device according to claim 1, further comprising:

   a control unit configured to specify data to be used for the propagation operation and instructs the first number of processing devices to execute the propagation operation, wherein the control unit includes the allocation unit.

5. The information processing device according to claim 1, 2 or 3, further comprising:

   a first control unit configured to instruct each processing device to execute an operation; and a second control unit configured to specify data to be used for the propagation operation and instructs the first control unit to execute the propagation operation, wherein the first control unit includes the allocation unit.

6. The information processing apparatus according to claim 1, wherein the allocation unit allocates, when allocating the propagation operation in the layer of the deep learning to the first number of processing devices, the second number of processing devices for every third number of pieces of input data.

7. An information processing method performed by an apparatus that performs deep learning using a first number of processing devices performing processes in parallel, the deep learning being performed using dynamic fixed-point number, the information processing method:

   evenly allocating, when allocating a propagation operation in a layer of the deep learning to the first number of processing devices, a second number of processing devices for every third number of pieces of input data, the third number being less than a first number, the second number of the processing device acquiring a statistical information used for adjusting decimal point positions of the dynamic fixed-point numbers, allocating output channels for every third number of pieces of input data while shifting the output channels by a fourth number.

8. The information processing method according to claim 7, wherein the second number of the processing device being less than the first number of the processing devices, the first number of the processing devices including the second number of the processing device.

9. The information processing method according to claim 7, further comprising:

   specifying data to be used for the propagation operation; and instructing the first number of processing devices to execute the propagation operation.

FIG. 1

# FIG. 2

DEEP LEARNING USING DYNAMIC FIXED-POINT NUMBERS

LEARNING PROCESS: MINI-BATCH

INPUT DATA

Conv_1 → Pool_1 → Conv_2 → Pool_2 → fc1 → fc2 ← CORRECT DATA

(t1)

STATISTICAL INFORMATION | STATISTICAL INFORMATION | STATISTICAL INFORMATION | STATISTICAL INFORMATION | STATISTICAL INFORMATION | STATISTICAL INFORMATION

SAVE STATISTICAL INFORMATION ON SOME VARIABLES IN EACH LAYER

DECIMAL POINT POSITION UPDATE

Conv_1 | Pool_1 | Conv_2 | Pool_2 | fc1 | fc2

STATISTICAL INFORMATION | STATISTICAL INFORMATION | STATISTICAL INFORMATION | STATISTICAL INFORMATION | STATISTICAL INFORMATION | STATISTICAL INFORMATION

(t2)

UPDATE DECIMAL POINT POSITION OF EACH VARIABLE IN EACH LAYER IN LINE WITH STATISTICAL INFORMATION

# FIG. 3

STATISTICAL INFORMATION EXAMPLE: DISTRIBUTION OF NON-SIGN MOST SIGNIFICANT BITS

# FIG. 4

X

OUTPUT CHANNEL #0    OUTPUT CHANNEL #1    IMAGE #1

12a

12

IMAGE #0

| PE | PE | PE | PE |
| PE | PE | PE | PE |
| ... | ... | ... | ... |
| PE | PE | PE | PE |

| PE | PE | PE | PE |
| PE | PE | PE | PE |
| ... | ... | ... | ... |
| PE | PE | PE | PE |

...

| PE | PE | PE | PE |
| PE | PE | PE | PE |
| ... | ... | ... | ... |
| PE | PE | PE | PE |

OUTPUT CHANNEL #(Cout-1)

IMAGE #(N-1)

## FIG. 5A

DISTRIBUTION IS MADE DIFFERENT FROM DISTRIBUTION OF ORIGINAL STATISTICAL INFORMATION DUE TO THINNING OUT

(a)

WITHOUT ☐THINNING OUT   WITH IMAGE ▣THINNING OUT (1/4)   ▨WITH OUTPUT CHANNEL THINNING OUT (1/4)   ▤WITH IMAGE × OUTPUT CHANNEL THINNING OUT (1/4*1/4)

RANGE FROM -14 TO -19 OF EACH SERIES IS INDIVIDUALLY ENLARGED

HORIZONTAL LINES DENOTE rmax, WHICH IS THRESHOLD VALUE FOR DETERMINING DECIMAL POINT POSITION (HERE, 0.002%) IN DYNAMIC FIXED-POINT NUMBERS, UPPER LIMIT OF REPRESENTABLE RANGE IS DETERMINED SUCH THAT rmax IS NOT EXCEEDED (VERTICAL LINE PORTIONS)

(b)

rmax=0.002%

☐WITHOUT THINNING OUT   ▣WITH IMAGE THINNING OUT (1/4)   ▨WITH OUTPUT CHANNEL THINNING OUT (1/4)   ▤WITH IMAGE × OUTPUT CHANNEL THINNING OUT (1/4*1/4)

FORM OF DISTRIBUTION CHANGES DUE TO THINNING OUT. MOST SIGNIFICANT BIT IN REPRESENTABLE RANGE IS DETERMINED AS "-17" WHEN NOT THINNED OUT, WHEREAS "-15" AND "-16" ARE GIVEN IN SOME CASES WHEN THINNING OUT IS PERFORMED

15

## FIG. 5B

DISTRIBUTION IS MADE DIFFERENT FROM DISTRIBUTION OF ORIGINAL STATISTICAL INFORMATION DUE TO THINNING OUT

(a)

| □ WITHOUT THINNING OUT | ▣ WITH IMAGE THINNING OUT( 1/4) | ▣ WITH OUTPUT CHANNEL THINNING OUT (1/4) | ▣ WITH IMAGE × OUTPUT CHANNEL THINNING OUT (1/4*1/4) |

RANGE FROM -14 TO -19 OF EACH SERIES IS INDIVIDUALLY ENLARGED

HORIZONTAL LINES DENOTE rmax, WHICH IS THRESHOLD VALUE FOR DETERMINING DECIMAL POINT POSITION (HERE, 0.002%)
IN DYNAMIC FIXED-POINT NUMBERS, UPPER LIMIT OF REPRESENTABLE RANGE IS DETERMINED SUCH THAT rmax IS NOT EXCEEDED (VERTICAL LINE PORTIONS)

(b)

| □ WITHOUT THINNING OUT | ▣ WITH IMAGE THINNING OUT( 1/4) | ▣ WITH OUTPUT CHANNEL THINNING OUT (1/4) | ▣ WITH IMAGE × OUTPUT CHANNEL THINNING OUT (1/4*1/4) |

FORM OF DISTRIBUTION CHANGES DUE TO THINNING OUT. MOST SIGNIFICANT BIT IN REPRESENTABLE RANGE IS DETERMINED AS "-17" WHEN NOT THINNED OUT, WHEREAS "-16" AND "-18" ARE GIVEN IN SOME CASES WHEN THINNING OUT IS PERFORMED

# FIG. 6A

CONVOLUTION
OPERATION

OUTPUT CHANNELS
#0, #4, #8,...
#0,#4,#8···

12

| PE | PE | PE | PE |
| PE | PE | PE | PE |
| ... | ... | ... | ... |
| PE | PE | PE | PE |
| ... | ... | ... | ... |
| PE | PE | PE | PE |
| PE | PE | PE | PE |
| ... | ... | ... | ... |
| PE | PE | PE | PE |

WHEN SOME OUTPUT CHANNELS ARE
TARGETED FIXEDLY

INPUT IMAGE

VARIOUS FILTERS ARE APPLIED

NUMBER OF
OUTPUT CHANNELS

FILTER PATTERN CHANGES WITH LEARNING

WHEN FILTER (OUTPUT CHANNEL) WITH SIMILAR
PATTERN IS TARGETED FOR ACQUIRING STATISTICAL
INFORMATION, INFORMATION IS BIASED

# FIG. 6B

ex. 1/4 OF OUTPUT CHANNELS,1/4 OF IMAGES

STATISTICAL INFORMATION CAN BE ACQUIRED FOR ONLY ONE OF FOUR IMAGES
→ 3/4 OF IMAGES ARE NOT INVOLVED IN DECIMAL POINT POSITION DETERMINATION AT ALL

WHEN STATISTICAL INFORMATION REGARDING SIMILAR IMAGES AMONG ALL IMAGES IS EXCLUSIVELY ACQUIRED, STATISTICAL INFORMATION IS BIASED

IMAGES IN ONE MINI-BATCH (EX., 256 IMAGES)

WHEN IMAGES WITH SOLID LINE FRAMES ARE TARGETED FOR ACQUIRING STATISTICAL INFORMATION, IT IS CONSIDERED THAT DATA IS BIASED BECAUSE IMAGES HAVE SIMILAR FEATURES (QUADRUPEDS)

# FIG. 7

OUTPUT CHANNEL #0

OUTPUT CHANNEL #1

OUTPUT CHANNEL #15

12a

12

| PE | PE | PE | ... | PE |

IMAGE #0

OUTPUT CHANNELS %16 =0:
OUTPUT CHANNELS 0, 16, 32, ...

| PE | PE | PE |
| PE | PE | PE | ... | PE |

OUTPUT CHANNEL #(Cout-1)

OUTPUT CHANNEL #1

OUTPUT CHANNEL #2

OUTPUT CHANNEL #16

| PE | PE | PE | ... | PE |

IMAGE #1

OUTPUT CHANNELS %16 =1:
OUTPUT CHANNELS 1, 17, 33, ...

| PE | PE | PE |
| PE | PE | PE | ... | PE |

OUTPUT CHANNEL #0

OUTPUT CHANNEL #15

OUTPUT CHANNEL #16

OUTPUT CHANNEL #30

| PE | PE | PE | ... | PE |

IMAGE #(N-1)

| PE | PE | PE | ... | PE |
| PE | PE | PE | ... | PE |

OUTPUT CHANNEL #14

(WHEN N IS MULTIPLE OF 16)

19

# FIG. 8

OUTPUT CHANNEL #0

OUTPUT CHANNEL #1

12a

12

| PE | PE | PE | PE |
| PE | PE | PE | PE |
| ... | ... | ... | ... |
| PE | PE | PE | PE |

...

IMAGE NUMBER %16=0:
OUTPUT CHANNELS0, 4, 8, ...

...

OUTPUT CHANNEL #1

OUTPUT CHANNEL #2

| PE | PE | PE | PE |
| PE | PE | PE | PE |
| ... | ... | ... | ... |
| PE | PE | PE | PE |

...

IMAGE NUMBER %16=4:
OUTPUT CHANNELS 1, 5, 9, ...

...

OUTPUT CHANNEL #(Cout-3)

...

OUTPUT CHANNEL #(Cout-1)

OUTPUT CHANNEL #0

...

| PE | PE | PE | PE |
| PE | PE | PE | PE |
| ... | ... | ... | ... |
| PE | PE | PE | PE |

...

IMAGE NUMBER %16 =12:
OUTPUT CHANNELS 3, 7, 11, ...

...

# FIG. 9

HOST                                    ACCELERATOR BOARD

START

CREATE GRAPH AND RESERVE REGION  S1

GENERATE INITIAL VALUE  S2

LEARNING END CONDITION

LOAD LEARNING DATA  S3

LAYERS (FORWARD DIRECTION)

| CALL LAYER'S FORWARD PROPAGATION OPERATION  S4 | EXECUTE FORWARD PROPAGATION OPERATION  S5 |

LAYERS (REVERSE DIRECTION)

| CALL LAYER'S BACKPROPAGATION OPERATION  S6 | EXECUTE BACKPROPAGATION OPERATION  S7 |

| INSTRUCT TO UPDATE PARAMETER  S8 | EXECUTE PARAMETER UPDATE  S9 |

| DETERMINE DECIMAL POINT POSITION  S10 | EXECUTE DECIMAL POINT POSITION UPDATE  S11 |

END

FIG. 10A

| HOST | 20 | | ACCELERATOR BOARD | 10 |

HOST ⟍20

○
↓ ⟍S21
┌─────────────────────┐
│   PE ALLOCATION     │
└─────────────────────┘
       ⟍S22
┌─────────────────────┐
│  CALL PROPAGATION   │
│     OPERATION       │
└─────────────────────┘
       ○

PE ALLOCATION
INFORMATION
INPUT DATA ADDRESS
OUTPUT DATA
ADDRESS

END NOTIFICATION

ACCELERATOR BOARD ⟍10

       ⟍S23
┌─────────────────────┐
│ EXECUTE PROPAGATION │
│     OPERATION       │
└─────────────────────┘

FIG. 10B

HOST ⟍20

○
↓ ⟍S26
┌─────────────────────┐
│  CALL PROPAGATION   │
│     OPERATION       │
└─────────────────────┘

       ○

NPUT DATA
ADDRESS
OUTPUT DATA
ADDRESS

END NOTIFICATION

ACCELERATOR BOARD ⟍10

CONTROLLER ⟍11

       ⟍S27
┌─────────────────────┐
│   PE ALLOCATION     │
└─────────────────────┘
       ⟍S28
┌─────────────────────┐
│  CALL PE OPERATION  │
└─────────────────────┘
       ⟍S30
┌─────────────────────┐
│ WAIT FOR END OF ALL │
│     OPERATIONS      │
└─────────────────────┘

PE ⟍12

       ⟍S29
┌─────────────────────┐
│      EXECUTE        │
│     OPERATION       │
└─────────────────────┘

22

# FIG. 11

```
              ┌──────────────┐
              │    START     │
              └──────┬───────┘
                     │                                    S31
       ┌─────────────┴──────────────────────────────┐
       │        N_L=CEIL(N_P/Cout)                   │
       └─────────────┬──────────────────────────────┘
                     │
       ┌─────────────┴──────────────────────────────┐
       │        i=0 to N-1 step N_L                  │
       └─────────────┬──────────────────────────────┘
                     │
       ┌─────────────┴──────────────────────────────┐
       │        n=0 to N_L-1                         │
       └─────────────┬──────────────────────────────┘
                     │                                    S32
       ┌─────────────┴──────────────────────────────┐
       │        j=n/X                                │
       │        k=n%X                                │
       │        p0=k*Y+j*Cout                        │
       └─────────────┬──────────────────────────────┘
                     │
       ┌─────────────┴──────────────────────────────┐
       │        c=0 to Cout-1                        │
       └─────────────┬──────────────────────────────┘
                     │                                    S33
       ┌─────────────┴──────────────────────────────┐
       │        l=c/Y                                │
       │        m=c%Y                                │
       │        p1=m+l*(X * Y)                       │
       └─────────────┬──────────────────────────────┘
                     │                                    S34
       ┌─────────────┴──────────────────────────────┐
       │  ALLOCATE CONVOLUTION OPERATION OF          │
       │  IMAGE #(n + i * N_L) AND OUTPUT CHANNEL     │
       │  #c TO PE #(p0 + p1)                         │
       └─────────────┬──────────────────────────────┘
                     │
              ┌──────┴───────┐
              │     END      │
              └──────────────┘
```

$N_L = \mathrm{CEIL}(N_P / \mathrm{Cout})$ — S31

i=0 to N-1 step $N_L$

n=0 to $N_L$-1

$j = n/X$
$k = n\%X$
$p0 = k*Y + j*\mathrm{Cout}$ — S32

c=0 to Cout-1

$l = c/Y$
$m = c\%Y$
$p1 = m + l*(X * Y)$ — S33

ALLOCATE CONVOLUTION OPERATION OF IMAGE #(n + i * $N_L$) AND OUTPUT CHANNEL #c TO PE #(p0 + p1) — S34

FIG. 12

ONE IMAGE

ALL PES

P0:NUMBER GIVEN TO TOP PE OF IMAGE
P1:RELATIVE POSITION WITH RESPECT
TO TOP OF EACH IMAGE

# FIG. 13

```
              ┌──────────────┐
              │    START     │
              └──────┬───────┘
                     │                          ⌐S41
        ┌────────────┴──────────────────┐
        │    $N_L = CEIL(N_P/Cout)$      │
        └────────────┬──────────────────┘
                     │
        ┌────────────┴──────────────────┐
        │    i=0 to N-1 step $N_L$       │
        └────────────┬──────────────────┘
                     │
        ┌────────────┴──────────────────┐
        │    n=0 to $N_L$ - 1            │
        └────────────┬──────────────────┘
                     │                          ⌐S42
        ┌────────────┴──────────────────┐
        │    p0=n* Cout                  │
        └────────────┬──────────────────┘
                     │
        ┌────────────┴──────────────────┐
        │    c=0 to Cout-1               │
        └────────────┬──────────────────┘
                     │                          ⌐S43
        ┌────────────┴──────────────────┐
        │   $c'=(c-n+Cout)\%Cout$        │
        │   p1=c'                        │
        └────────────┬──────────────────┘
                     │                          ⌐S44
        ┌────────────┴──────────────────┐
        │ ALLOCATE CONVOLUTION OPERATION OF │
        │ IMAGE #(n + i * $N_L$) AND OUTPUT │
        │ CHANNEL #c TO PE #(p0 + p1)       │
        └────────────┬──────────────────┘
                     │
        ┌────────────┴──────────────────┐
        └────────────┬──────────────────┘
                     │
        ┌────────────┴──────────────────┐
        └────────────┬──────────────────┘
                     │
        ┌────────────┴──────────────────┐
        └────────────┬──────────────────┘
                     │
              ┌──────┴───────┐
              │     END      │
              └──────────────┘
```

# FIG. 14

P0:NUMBER GIVEN TO TOP PE OF IMAGE
P1:各RELATIVE POSITION WITH RESPECT TO TOP OF EACH IMAGE

# FIG. 15

```
                    ┌──────────────┐
                    │    START     │
                    └──────┬───────┘
                           │                              S51
        ┌──────────────────▼───────────────────────┐
        │          N_L=CEIL(N_P/Cout)              │
        └──────────────────┬───────────────────────┘
                           │
        ┌──────────────────▼───────────────────────┐
        │          i=0 to N-1 step N_L             │
        └──────────────────┬───────────────────────┘
                           │
        ┌──────────────────▼───────────────────────┐
        │           n=0 to N_L-1                    │
        └──────────────────┬───────────────────────┘
                           │                              S52
        ┌──────────────────▼───────────────────────┐
        │                 j=n/X                     │
        │                 k=n%X                     │
        │             p0=k*Y+j* Cout                │
        └──────────────────┬───────────────────────┘
                           │
        ┌──────────────────▼───────────────────────┐
        │           c=0 to Cout-1                   │
        └──────────────────┬───────────────────────┘
                           │                              S53
        ┌──────────────────▼───────────────────────┐
        │         c'=(c-j+Cout)%Cout                │
        │                 l=c'/Y                     │
        │                 m=c'%Y                     │
        │             p1=m+l*(X*Y)                  │
        └──────────────────┬───────────────────────┘
                           │                              S54
        ┌──────────────────▼───────────────────────┐
        │   ALLOCATE CONVOLUTION OPERATION OF       │
        │ IMAGE #(n + i * N_L) AND OUTPUT CHANNEL   │
        │        #c TO PE #(p0 + p1)                │
        └──────────────────┬───────────────────────┘
```

$N_L = CEIL(N_P/Cout)$  — S51

$i=0$ to $N-1$ step $N_L$

$n=0$ to $N_L-1$

$j=n/X$
$k=n\%X$
$p0=k*Y+j*Cout$  — S52

$c=0$ to $Cout-1$

$c'=(c-j+Cout)\%Cout$
$l=c'/Y$
$m=c'\%Y$
$p1=m+l*(X*Y)$  — S53

ALLOCATE CONVOLUTION OPERATION OF IMAGE #$(n + i * N_L)$ AND OUTPUT CHANNEL #c TO PE #$(p0 + p1)$  — S54

END

# FIG. 16

k=0　　　　k=1　　…　　k=X-1

m=0　　m=Y-1　　　　　　　　　12

j=0　　l=0
l=1
l=Cout/Y-1

i=0　　j=1

OUTPUT CHANNELS
ARE SHIFTED USING j

…

j=N$_L$/X-1

ONE IMAGE

ALL PES

i=N$_L$

P0:NUMBER GIVEN TO TOP PE OF IMAGE
P1:RELATIVE POSITION WITH RESPECT TO TOP OF EACH IMAGE

# FIG. 17A

(a)

WITHOUT THINNING OUT    EMBODIMENT    WITH IMAGE THINNING OUT (1/4)    WITH OUTPUT CHANNEL THINNING OUT (1/4)    WITH IMAGE × OUTPUT CHANNEL THINNING OUT (1/4*1/4)

RANGE FROM -14 TO -19 OF EACH SERIES IS INDIVIDUALLY ENLARGED

(b)

WITHOUT THINNING OUT

EMBODIMENT

WITH IMAGE THINNING OUT (1/4)

WITH OUTPUT CHANNEL THINNING OUT (1/4)

WITH IMAGE × OUTPUT CHANNEL THINNING OUT (1/4*1/4)

MOST SIGNIFICANT BIT IN REPRESENTABLE RANGE IS APPROPRIATELY DETERMINED AS "-18" EVEN WHEN THINNING OUT IS PERFORMED

# FIG. 17B

(a)

☐ WITHOUT THINNING OUT ☒ EMBODIMENT ☒ WITH IMAGE THINNING OUT (1/4) ☒ WITH OUTPUT CHANNEL THINNING OUT (1/4) ■ WITH IMAGE × OUTPUT CHANNEL THINNING OUT (1/4*1/4)

RANGE FROM -14 TO -19 OF EACH SERIES IS INDIVIDUALLY ENLARGED

(b)

MOST SIGNIFICANT BIT IN REPRESENTABLE RANGE IS APPROPRIATELY DETERMINED AS "-17" EVEN WHEN THINNING OUT IS PERFORMED

Europäisches
Patentamt
European
Patent Office
Office européen
des brevets

# EUROPEAN SEARCH REPORT

Application Number

EP 21 15 4527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 575 952 A1 (FUJITSU LTD [JP]) 4 December 2019 (2019-12-04) * abstract * * paragraph [0002] - paragraph [0017] * * paragraph [0020] - paragraph [0055]; figures 1-5 * * paragraph [0084] - paragraph [0105]; figures 10-16 * | 1-9 | INV. G06N3/04 G06N3/063 G06N3/08 |
| A | KAIYUAN GUO ET AL: "Angel-Eye: A Complete Design Flow for Mapping CNN Onto Embedded FPGA", IEEE TRANSACTIONS ON COMPUTER AIDED DESIGN OF INTEGRATED CIRCUITS AND SYSTEMS., vol. 37, no. 1, 17 May 2017 (2017-05-17), pages 35-47, XP055542411, US ISSN: 0278-0070, DOI: 10.1109/TCAD.2017.2705069 * the whole document * | 1-9 | |
| A | Philipp Gysel ET AL: "HARDWARE-ORIENTED APPROXIMATION OF CONVO- LUTIONAL NEURAL NETWORKS", , 11 April 2016 (2016-04-11), XP055398866, Retrieved from the Internet: URL:https://arxiv.org/pdf/1604.03168v1.pdf [retrieved on 2017-08-16] * the whole document * | 1-9 | TECHNICAL FIELDS SEARCHED (IPC)<br><br>G06F G06N |

The present search report has been drawn up for all claims

| Place of search | Date of completion of the search | Examiner |
|---|---|---|
| The Hague | 18 July 2021 | Malatesta, Lori |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 893 165 A1**

## ANNEX TO THE EUROPEAN SEARCH REPORT
## ON EUROPEAN PATENT APPLICATION NO.

EP 21 15 4527

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2021

| Patent document cited in search report | | Publication date | Patent family member(s) | | Publication date |
|---|---|---|---|---|---|
| EP 3575952 | A1 | 04-12-2019 | EP | 3575952 A1 | 04-12-2019 |
| | | | JP | 6540725 B2 | 10-07-2019 |
| | | | JP | 2018124681 A | 09-08-2018 |
| | | | US | 2019339939 A1 | 07-11-2019 |
| | | | WO | 2018139266 A1 | 02-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018124681 A